# EUROPÄISCHE PATENTANMELDUNG

(11) **EP 2 433 826 A1**
(43) Veröffentlichungstag der Anmeldung: **28.03.2012**
(21) Anmeldenummer: 11180362.3
(22) Anmeldetag: 07.09.2011
(51) Int. Cl.: B60H 1/00

(54) **Strömungskanalanordnung**

(30) Priorität: 28.09.2010 DE 102010041554
(71) Anmelder: Behr GmbH & Co. KG, 70469 Stuttgart (DE)
(72) Erfinder: Lang, Matthias, 70469 Stuttgart (DE); Paul, Michael, 74343 Sachsenheim (DE)
(74) Vertreter: Grauel, Andreas

(57) **Zusammenfassung**

Strömungskanalanordnung (1) mit einem innerhalb eines Kanals geführten und über eine verstellbare Klappe (2) regelbaren Luftstrom oder dergleichen, insbesondere für eine Kraftfahrzeug-Klimaanlage, dadurch gekennzeichnet, dass die in Schließstellung mit einer Anströmkante (5, 6) an einer Kanalwand anliegende Klappe (2) entlang der Anströmkante (5, 6) eine zackenförmige Struktur (7, 8) mit Zähnen (9) und zwischenliegenden Ausnehmungen (10) aufweist.

## Beschreibung

Die Erfindung betrifft eine Strömungskanalanordnung, nach dem Oberbegriff des Patentanspruchs 1.

Bel luftleitenden Einrichtungen ist es oftmals erforderlich, die durch die luftleitende Einrichtung strömende Luft auf unterschiedliche Art zu beeinflussen, So erweist es sich bei vielen Anwendungen als erforderlich, die Menge der durch die luftleitende Einrichtung strömenden Luft zu regulieren. Oftmals ist es auch erforderlich, die Richtung der durch die luftleitende Einrichtung strömenden Luft zu beeinflussen.

Ein typisches Anwendungsgeblet für derartige luftleitende Strömungskanalanordnungen ist die Befültung eines Kraftfahrzeugs. Hier wird Frischluft von außen angesaugt gegebenenfalls mit einem Umluftanteil vermischt, und beispielsweise durch Kühlen, Heizen und/oder Filtern aufbereitet, bevor sie in den Innenraum des Kraftfahrzeugs abgegeben wird. Zur Steuerung der Luftströme dienen nach dem Stand der Technik Luftklappen, mit denen einerseits die Luftmenge gesteuert werden kann, andererseits die Richtung der Luftströmung beeinflusst werden kann. Derartige Luftklappen haben sich bewährt, und erfüllen die ihnen übertragenen Aufgaben.

Mit zunehmenden Komforterfordernissen beim Kraftfahrzeugbau treten inzwischen jedoch auch die Nachteile derartiger Luftklappen zu Tage. Ein Nachteil liegt insbesondere in der Geräuschentwicklung, die durch derartige Luftklappen hervorgerufen wird, wenn diese von Luft umströmt werden. Mit abnehmenden Innenraumgerauschen bei Kraftfahrzeugen kann die durch Luftklappen verursachte Geräuschentwicklung zwischenzeitlich nicht mehr ignoriert werden.

Der Erfindung liegt daher die Aufgabe zu Grunde, eine Strömungskanalanordnung vorzuschlagen, welche über einen besonders großen Betriebsbereich hinweg ein niedriges Betriebsgeräusch zeigt.

Diese Aufgabe wird gelöst durch eine Strömungskanalanordnung mit den Merkmalen des Anspruchs 1. Vorteilhafte Ausgestaltungen sind Gegenstand der Unteransprüche,

Erfindungsgemäß ist die Strömungskanalanordnung dadurch gekennzeichnet, dass die in Schließstellung mit einer Abströmkante an einer Kanalwand anliegende Klappe entlang der Anströmkante eine zackenförmige Struktur mit Zähnen und zwischenliegenden Ausnehmungen aufweist. Diese Struktur bewirkt, dass eine sich dort ausbildende Scherschicht sofort mit dem Strömungsabriss deutlich dreidimensional gestört wird. Das bewirkt einen raschen Zusammenbruch der Scherschicht und damit eine kleinere Ablöseblase auf der Oberseite des Klappenkörpers. Weiterhin würden dadurch die Amplituden der dominanten Eigenfrequenzen solcher Scherschichten reduziert. Beispielsweise kann es sich bei der Klappe um eine symmetrisch gelagerte Klappe mit oberen und unteren Anströmkanten handeln. Beispielsweise kann die zackenförmige Struktur entlang der Anströmkante in diese im Wesentlichen eingearbeitet sein oder jedoch erhaben aus dieser hervorstehen.

Vorzugsweise gelangt die um eine Achse schwenkbare Klappe in Schließstellung mit ihrer oberen Anströmkante an die obere Kanalwand und mit ihrer unteren Anströmkante an die untere Kanalwand dichtend zur Anlage, wobei jede Anströmkante die zackenförmige Struktur aufweist.

Durch die dadurch entstehende größere Erweiterung des Strömungsquerschnitts (Diffusorwirkung) und dem damit verbundenen höheren Druckanstieg besteht die Gefahr der Strömungsablösung an der gegenüberliegenden Kanalwand. Um dem entgegenzuwirken sind an der oberen und/oder unteren Kanalwand zu den Ausnehmungen der zackenförmigen Struktur komplementäre, die Ausnehmungen bei zunehmender Schließstellung ausfüllende, Schlißelemente vorgesehen, die denselben Effekt an der Kanalwand erzeugen sollen. Diese erwähnten Wandseitigen Elemente unterstützen auch der Abdichtung beim Schließen der Klappe. Bevorzugt, jedoch keinesfalls zwingend, sind die Schließelemente einstückig mit dem jeweiligen Kanalwandabschnitt bzw. dem Strömungskanal hergestellt,

Eine Ausführungsform sieht vor, dass die Anströmkante eine grobe zackenförmige Struktur aufweisen kann. Eine grobskalige Gestaltung der Klappenkanten kann Ablösegebiete auf der Klappenfläche durch Einbringen großskaliger, dreidimensionaler Störungen beseitigen bzw. reduzieren.

Eine weitere Ausführungsform sieht vor, dass zur Verhinderung von, beispielsweise Klappenpfeifen, die oben beschriebene Struktur der Anströmund/oder Endkanten (sowie weiterer gerader Kanten) zusätzlich mit einer feineren zackenförmingen Struktur versehen sein kann.

Eine bevorzugte Ausführungsform sieht vor, dass die Zähne der zackenförmigen Struktur und/oder der Schließelemente scharfe Vorderkanten aufweisen können. Die scharfen Vorderkanten, die im Zusammenschluss zwischen Klappe und Schließelement wie Zähne ineinander greifen, sind u.a. notwendig, um eine ausreichende und zuverlässige Schließfunktion des Strömungskanals zu gewährleisten,

Eine weitere bevorzugte Ausführungsform sieht vor, dass die Zähne der zackenförmigen Struktur und/oder der Schließelemente abgerundete Vorderkanten aufweisen können. Dabei kann die tuberkel- bzw. beulenähnliche Struktur einen sinusförmigen oder auch einen halbsinusförmigen Verlauf entlang der Vorderkante aufweisen.

Sowohl an der Klappe und/oder an der Kanalwand können die oben erwähnten Elemente aus weichelastischem Material gestaltet sein, um ein gutes Abdichten beim Schließen der Klappe zu erreichen.

Weitere Vorteile, Merkmale und Einzelheiten der Erfindung ergeben sich aus der nachfolgenden Beschreibung, in der unter Bezugnahme auf die einzige Zeichnung ein Ausiührüngsbeispiel der Erfindung beschrieben ist. Dabei können die in den Ansprüchen und in der Beschreibung enwähnten Merkmale jeweils einzeln für sich oder in beliebiger Kombination erfindungswesentlich sein,

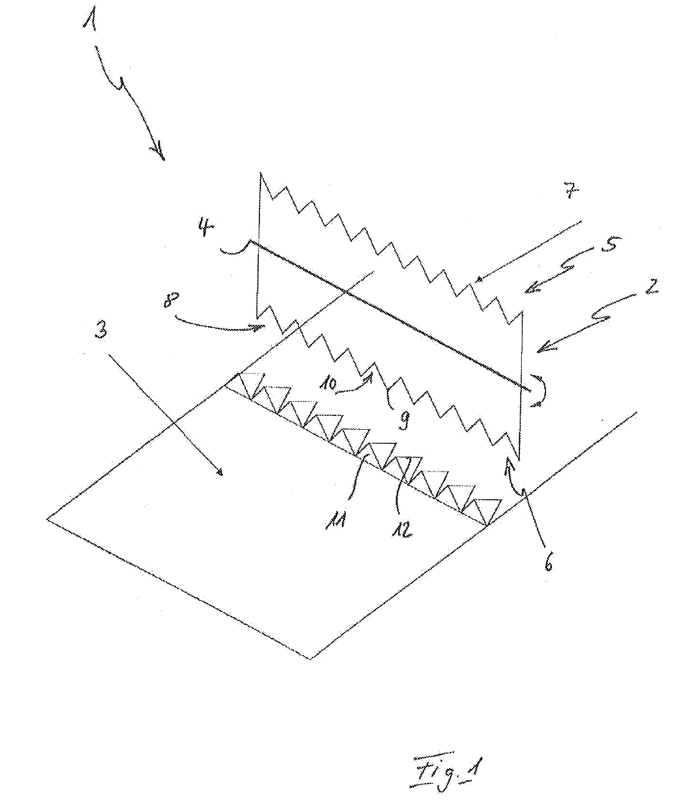

Fig. 1 zeigt ein Ausführungsbeispiel einer erfindungsgeimäßen Strömungskanalanordnung 1 in perspektivisch, schematischer Teildarstellung. Die Strömungskanalanordnung 1 umfasst einen Kanal sowie eine innerhalb des Kanals angeordnete, drehbar gelagerte Klappe 2. Bei der hier gezeigten Klappe 2 handelt es sich um eine symmetrisch gelagerte Klappe.

Der Kanal, von dem bei dieser Darstellung lediglich der Kanalboden 3 dargestellt ist, dient zur Weiterleitung eines innerhalb einer Kraftfahrzeug-Klimaanlage geführten Luftstroms.

Die symmetrische Klappe, 2 ist drehbar um eine Achse 4 innerhalb der nicht gezeigten Kanal-Seitenwände gelagert Die Klappe 2 weist eine obere und eine untere Anströmkante 5, 6 auf, wobei die schwenkbare Klappe 2 in Schließsteillung mit ihrer oberen Anströmkante 5 an die nicht dargestellte obere Kanalwand und mit ihrer unteren Anströmkante 6 an die untere Kanalwand (Kanalboden 3) dichtend zur Anlage kommt, wobei jede Anströmkante 5, 6 eine zackenförmige Struktur 7, 8 aufweist. Die Struktur 7, 8 besteht im Wesentlichen aus einer Vielzahl von Zähnen 9 mit zwischenliegenden Ausnehmungen 10.

Die zackenförmige Struktur 7, 8 ist als grobe zackenförmige Struktur ausgebildet Die struktur 7, 8 ist im Wesentlichen in die Anströmkante 5, 6 eingearbeitet, beispielsweise durch ein entsprechendes Formwerkzeug bzw. durch entsprechende Formgebung während des Herstellungsverfahrens. Die Klappe 2 ist zur besseren Kenntlichkeit erhöht vom Kanalboden 3 dargestellt

Auf dem Kanalboden 3 und auf der nicht dargestellten oberen Kanalwand sind mit der Struktur 7, 8 mehrere komplementär ausgebildete Schließelemente 11 vorgesehen, wobei die Schließelemente 11 die innerhalb der Struktur 7, 8 gebildeten Ausnehmungen 10 bei zunehmender Schließstellung ausfüllen und somit verschließen. Die Schließelemente 11 weisen scharfe Vorderkanten 12 auf, wobei die Vorderkanten 12 schräg verlaufend entgegen der Strömungsrichtung angeordnet sind. Die Vorderkanten 12 der Schließelemente 11 können durchaus auch abströmseitig bzw. in Strömungsrichtung angeordnet sein. Dies gilt in analoger Weise auch für die Elemente auf der beispielsweise ebenen Kanalwand.

In vollständiger Schließstellung der Klappe 2 ergibt sich ein im Wesentlichen fluchtender bzw. durchgehender Wandungsabschnitt.

Mit der hier gezeigten Strömungskanalanordnung 1 soll die Lärmentstehung, insbesondere im angestellten und im fest geschlossenen Zustand der Klappe 2, reduziert werden. In ähnlicher Weise sollen Ablösungen an den Kanalwänden, insbesondere im Bereich der Klappenanschläge, reduziert oder beseitigt werden. Gleichzeitig soll das vollständige Schließen und Dichten der Klappe 2 gewährleistet bleiben.

## Patentansprüche

1. Strömungskanalanordnung (1) mit einem innerhalb eines Kanals geführten und über eine verstellbare Klappe (2) regelbaren Luftstrom oder dergleichen, insbesondere für eine Kraftfahrzeug-Klimaanlage, **dadurch gekennzeichnet, dass** die in Schließstellung mit einer Anströmkante (5, 6) an einer Kanalwand anliegende Klappe (2) entlang der Anströmkante (5, 6) eine zackenförmige Struktur (7, 8) mit Zähnen (9) und zwischenliegenden Ausnehmungen (10) aufweist.

2. Strömungskanalanordnung nach Anspruch 1, **dadurch gekennzeichnet, dass** die um eine Achse (4) schwenkbare Klappe (2) in schließstellung mit ihrer oberen Anströmkante (5) an die obere Kanalwand und mit ihrer unteren Anströmkante (6) an die untere Kanalwand (3) dichtend zur Anlage kommt, wobei jede Anströmkante (5, 6) die zackenförmige Struktur (7, 8) aufweist.

3. Strömungskanalanordnung nach Anspruch 1 und/oder 2, **dadurch gekennzeichnet, dass** die obere und/oder untere Kanalwand (3) zu den Ausnehmungen (10) der zackenförmigen Struktur (7, 8) koniplementä. re, die Ausnehmungen (10) bei zunehmender Schließstellung ausfüllende, Schließelemente (11) aufweist.

4. Strömungskanalanordnung nach zumindest einem der Ansprüche 1 bis 3, **dadurch gekennzeichnet, dass** die Anströmkante (5, 6) eine grobe zackenförmige Struktur (7, 8) aufweist

5. Strömungskanalanordnung nach Anspruch 4, **dadurch gekennzeichnet, dass** die grobe zackenförmige Struktur (7, 8) und/oder weitere Endkanten zusätzlich eine feinere zackenförmige, Struktur aufweisen.

6. Strömungskanalanordnung nach zumindest einem der Ansprüche 1 bis 5, **dadurch gekennzeichnet, dass** die Zähne (9) der zackenförmigen Struktur (7, 8) und/oder die an zumindest einer Kanalwand (3) angeordneten Schließelemente (11) scharfe Vorderkanten (12) aufweisen.

7. Strömungskanalanordnung nach zumindest einem der Ansprüche 1 bis 6, **dadurch gekennzeichnet, dass** die Zähne der zackenförmingen Struktur und/oder die an zumindest einer Kanalwand angeordneten Schließelemente abgerundete Vorderkanten aufweisen.
